# EUROPEAN PATENT APPLICATION

(11) **EP 4 332 164 A1**
(43) Date of publication of application: **06.03.2024**
(21) Application number: 21940352.4
(22) Date of filing: 23.06.2021
(51) Int. Cl.: C08L 67/02, C08L 77/00, C08J 5/18, B32B 5/02, B32B 7/12, B32B 27/06, B32B 27/12, B32B 27/36

(54) **FILM FORMED FROM WASTE THERMOPLASTIC ELASTOMER AND RECYCLED POLYESTER, AND LAMINATE**

(30) Priority: 19.05.2021 CN 202110546429
(71) Applicant: Foshan King Wonder Hi-tech Co., Ltd., Foshan, Guangdong 528100 (CN); Jack Wolfskin Ausrüstung für Draussen GmbH & Co. KGaA, 65510 Idstein (DE); Topgolf Callaway Brands Corp., Carlsbad, CA 92008 (US)
(72) Inventor: LIN, Yuwei, Foshan, Guangdong 528100 (CN); XU, Yingbo, Foshan, Guangdong 528100 (CN); ZENG, Donghui, Foshan, Guangdong 528100 (CN); YAN, ZhiJian, Foshan, Guangdong 528100 (CN); GRASSO, Daniele, 65510 Idstein (DE); WONG, Wai Hing Imen, 65510 Idstein (DE)
(74) Representative: Canzler & Bergmeier Patentanwälte Partnerschaft mbB
(86) International application number: PCT/CN2021/101789
(87) International publication number: WO 2022/241903

(57) **Abstract**

Disclosed are a film prepared from a waste thermoplastic elastomer and recycled polyester, and a laminate thereof. The composition for forming the film comprises: 0.5%-90% of a waste thermoplastic elastomer, 0.5%-90% recycled polyester having an intrinsic viscosity of between 0.5-2, 0.01%-3% of a viscosity modifier, 0.01%-10% of a slipping agent for preventing adhesion when the prepared film is rolled, and 0%-98% of a fresh thermoplastic elastomer. The recycled polyester is a recycled polyester bottle, a polyester fishing net, a polyester packaging material, an electronic product polyester injection molded part, a polyester building product, polyester home textiles, and the like. The thermoplastic elastomer is a terylene elastomer, a nylon elastomer, a biologically derived nylon elastomer, and/or a biologically derived terylene elastomer. The prepared film has good moisture permeability, washing performance, tensile strength, and desired hand feel softness.

## Description

### Field of the invention

The present invention relates to the recycling and utilization of waste plastics, especially waste thermoplastic elastomer and recycled polyester. More specifically, the present invention relates to a film formed from waste thermoplastic elastomer and recycled polyester and laminate thereof.

### Background of the invention

The excellent performance and low cost of plastic products themselves make various plastic products play an important role in many fields. But while plastic products bring convenience to people's lives, the pollution of waste plastics on the environment has caused the Earth to be overwhelmed. Facts have proven that both landfill and incineration are not good treatment methods. A low-cost recycling treatment may be a better choice.

Polyethylene terephthalate (PET) is a kind of polyester material with good mechanical and processing properties, which can be used to produce beverage bottles, packaging bags, films, fibers, and other products. Because normal consumers often discard PET packaging directly, there is a large amount of discarded PET.

At present, the modification methods for recycled PET can be mainly divided into three categories. One is degradation modification, in which the recycled PET is first depolymerized into substances with low molecular weight such as terephthalic acid and its esters and then these substances are re-synthesized into PET or made into other products. The second is solid-phase polycondensation modification, in which the molecular weight of the recovered PET is increased at a specific temperature and other conditions and reused as a high viscosity polyester. The third is chemical chain extension modification, in which the recovered PET is reacted with the chain extender, resulting in an increase in the molecular weight of the recovered PET.

In the prior art, the Chinese patent 99812803.1 discloses a method for preparing foam products, comprising: heating a mixture containing the following components to a temperature not lower than the melting point of polyester to prepare polyester resin with a melt flow rate of 50g/10min or lower and 10-200% swelling, and then making the polyester resin to be thermally foamed with the help of a foaming agent, wherein the mixture comprises (a) 100 parts by weight of linear saturated polyester, (b) 0.1 to 10 parts by weight of a coupling agent mixture consisting of 0 to 100% by weight of compound containing two epoxy groups in the molecule and 100 to 0% by weight of compound containing two or more epoxy groups, and (c) 0.01-5 parts by weight of carboxylic acid metal salts as coupling reaction catalysts. The recycled polyester is made into foam products in this patent, which can be used as buffer materials, thermal insulation materials, packaging materials, food containers, distribution materials, etc.

Chinese patent 201110288666.8 discloses a method to increase the toughness and viscosity of a waste PET, comprising: 1) preparing raw materials, 2) crushing and drying, 3) mixing, 4) feeding; 5) extruding, 6) cooling and granulating. This patent also discloses a PET pellet prepared by this preparing method. In this patent, the raw materials include not only waste PET, but also toughening agent, antioxidant, heat stabilizer, chain extender, talc powder, etc. Among them, the toughening agent is a maleic anhydride graft or a glycidyl methacrylate graft, the antioxidant is one or two of antioxidant 1010 and antioxidant 168, and the heat stabilizer is one selected from the group consisting of phosphoric acid, polyphosphate and their derivatives such as triphenyl phosphate (TPP), trimethyl phosphate (TMP), etc. The function of the heat stabilizer is to prevent or reduce degradation or cross-linking of waste PET material occurred during processing and to extend the service life of PET material. The chain extender is one or two selected from the group consisting of carboxyl addition chain extenders and hydroxyl addition chain extenders. The carboxyl addition chain extenders can be bicycloethylene oxide compounds, bicyclic imine ether compounds, polycarbodiimine compounds, lactam compounds, etc. The hydroxyl addition chain extender can be diisocyanate, bicyclic carboxylic anhydride, bicyclic imine ester, etc.

Chinese patent 201410149632.4 discloses a method for manufacturing textile filament using recycled PET bottles, comprising: crushing, washing and drying the recycled PET bottles to obtain PET fragments; adding PET fragments into a parallel co-rotating double-screw extruder to melt them through co-mixing and filtration to obtain the melt; sending the melt into a sealed reaction vessel, injecting nitrogen into the sealed reaction vessel, adding a binary alcohol under the stirring of nitrogen flow, then adding aluminum based catalysts, mixing and stirring to conduct alcoholysis reaction, and obtaining the processed melt; and sending the processed melt from the sealed reaction vessel to a pressure-resistant reaction vessel through a closed pipeline, closing and vacuuming, stirring under negative pressure for poly-condensation reaction, spinning out through a die after the intrinsic viscosity of the melt reaches 0.65dl/g-0.70dl/g, and obtaining textile filament after high spinning.

Chinese patent application 201410306245.7 discloses a high tensile strength ultra-thin polyester film and its preparation method. The high tensile strength ultra-thin polyester film is made from the following components in weight percentage: bright polyester chips: 20-40, polyester masterbatch containing nanoscale SiO2 additive: 20-40, recycled material: 10-30, and high viscosity PET: 10-30. The intrinsic viscosity of high viscosity PET is 0.72-0.76dl/g. The thickness of high tensile strength ultra-thin polyester film is 4-5µm. This rejected patent application is relatively strict in selection of raw materials and is not suitable for recycling waste PET.

Chinese patent application 201910016689.X discloses a method and its application for using chain extenders to increase viscosity and recover polyester bottle chips. The method involves using the recovered polyester bottle chips as the matrix resin, adding chain extenders for chemical chain extension reaction, and preparing high viscosity polyester. The chain extender used is triphenyl phosphite and epoxy chain extender mixed in a weight ratio of 1.5:0.15-0.75.

Chinese patent application 202010232488.6 discloses a tackifier for recycling waste PET textiles, which is a random copolymer of polystyrene and glycidyl methacrylate with a mass percentage of 60-70% of polystyrene. The pending application can be used to recycle waste PET textiles, avoiding environmental pollution caused by the use of solvents.

Among the clothing, food, housing and transportation of human being, resin materials consumed in the clothing account for a significant portion of energy. The emerging advanced technologies representing clothing have integrated many functional clothing products. How to apply the waste thermoplastic elastomer and recycled polyester to the product at the same time, and how to replace the non-reusable part of the product, is the most important problem to be solved at present.

### Summary of the invention

The object of the present invention is to provide a film and laminate thereof prepared from waste thermoplastic elastomer and recycled polyester, wherein the film can be used for bonding onto clothing fabric, shoe fabric, luggage fabric, glove fabric and hat fabric, making device, packaging food, and other purposes.

As one aspect, in order to achieve the above objective, the present invention provides a film prepared from waste thermoplastic elastic and recycled polyester with a thickness of 3 µm-1000 µm. By weight percentage (the same below), the film comprises
0.5% -90% of waste thermoplastic elastomer,
0.5% -90% of recycled polyester with an intrinsic viscosity between 0.5 and 2,
0.01% -3% of viscosity regulator,
0.01% -10% of slipping agent used for preventing the prepared film from being adhered when the film is rolled, and
0% -98% of fresh thermoplastic elastomer,
wherein the thermoplastic elastomer is one or more selected from the group consisting of polyester elastomer, nylon elastomer, biologically derived nylon elastomer, and biologically derived polyester elastomer,
wherein viscosity modifier is a reactive viscosity modifier and/or a non-reactive viscosity modifier in which the non-reactive viscosity modifier is one or more selected from the group consisting of paraffin, microcrystalline wax, polyethylene wax, oxidized polyethylene wax, polypropylene wax, Sasolwax, hyperbranched polymer, APAO, N,N-ethylenedi(stearamide) (refered also as ethylene bis-stearamide), EVA, urea, hydroxylamine hydrochloride, hydroxylamine sulfate, and cyclohexanol and in which the reactive viscosity modifier is an epoxide or a multifunctional ester, alcohol, or amine compound with low molecular weight which contains hydroxyl or amino groups,
wherein the slipping agent is one or more selected from the group consisting of fatty acid and its ester, fatty acid amide, metal soap, hydrocarbon, organosilicon compound, stearic acid, butyl stearate, and ethylene bis-stearamide.

The waste thermoplastic elastomer used in the present invention is leftover material and/or cutting material. The recycled polyester used is one or more recycled materials selected from the group consisting of polyester bottles, polyester fishing nets, polyester packaging materials, polyester injection molded parts in electronic products, polyester construction products and polyester home textiles, preferably selected from the group consisting of recycled polyester bottles, polyester fishing nets, polyester packaging materials and polyester injection molded parts in electronic products.

It should be noted that the intrinsic viscosity of recycled polyester is preferably 0.05-2.0, more preferably 0.05-1.5, which will affect subsequent bonding process of the film.

The slipping agent used in the present invention is to prevent adhesion during the film-preparing process, especially during the film winding procedure. Therefore the slipping agent is different from a lubricant used in normal plastic processing.

Generally there are three types of commonly used slipping agents in a film making process: oleic acid amide (oleamide), erucic acid amide (erucamide), and silica (inorganic powder). However, organic slipping agents such as oleic acid amide and erucic acid amide are not suitable for the film of the present invention with a large amount of precipitates gathering on the surface of the film and causing severe frost, which would affect the printability, heat sealing and color of the film as well as the subsequent bonding procedure. Inorganic powder is a kind of opening agent which would affect the subsequent bonding of the film of the present invention as well as its usage. Therefore, one of the prerequisites for selecting a slipping agent in the present invention is that it should not have any influence on subsequent bonding procedure.

Preferably, the slipping agent of the present invention is fatty acids and their esters.

Similarly, in order to prevent the printability, heat sealing and color of the prepared film from being affected, as well as to prevent the subsequent bonding procedure from being affected, the viscosity modifier in the present invention is preferably a reactive viscosity modifier. For example, the reactive viscosity modifier can be one or more alcohol chain extenders selected from the group consisting of 1,4-butanediol (BDO), 1,6-hexanediol, glycerol, trimethylolpropane, diethylene glycol (DEG), triethylene glycol, Neopentyl glycol (NPG), sorbitol, and diethylaminoethanol (DEAE).

Alternatively, the reactive viscosity modifier may be one or more amine chain extenders and/or ester chain extenders selected from the group consisting of MOCA, liquid MOCA modified with formaldehyde, ethylenediamine (DA), N,N-dihydroxy (diisopropyl) aniline (HPA), hydroquinone bis(β- hydroxyethyl) ether (HQEE), bifunctional acid derivatives, isocyanates, anhydrides, epoxide, and glycidyl esters as well as their multifunctional derivatives.

More preferably, the viscosity modifier is epoxide, glycidyl esters and their multifunctional derivatives, because they are structurally similar to and compatible with thermoplastic elastomer, and will not cause a decrease in moisture permeability, elastic recovery, etc. of a thermoplastic elastomer film. More importantly, they are even helpful. Further more preferably, the viscosity modifier is epoxide, glycidyl esters, and their multifunctional derivatives with fewer functional groups, which will not cause flash polymerization. For example, it can have 2-4 functional groups, especially 3 functional groups.

In a specific embodiment of the present invention, the prepared film comprises
2.5% -99.8% of waste thermoplastic elastomer,
0.01% -2% of viscosity modifier,
0.01% -10% of slipping agent without influence on subsequent bonding, and
0% -90% of fresh thermoplastic elastomer.

In order to increase the utilization of waste thermoplastic elastomer, in another specific embodiment of the present invention, the prepared film comprises
80% -99.8% of waste thermoplastic elastomer,
0.01% -2% of viscosity modifier,
0.01% -10% of slipping agent without influence on subsequent bonding, and
0% -10% of fresh thermoplastic elastomer.

In general, the film of the present invention may also comprise some processing agents, such as antioxidants, UV agents, etc.

The film of the present invention can be in any color, and for a specific color 0.1-45% color powder (toner) can be added into the formula of the film.

In addition, the formula of the film of the present invention can also include some functional additives such as flame retardant, aerogel, infrared powder, graphene, calcium carbonate, titanium dioxide, phase change materials and other types of inorganic and organic functional powders with the proportion of 0-70%. But one of the prerequisites is that the subsequent bonding will not be affected by additive(s). Therefore extra attention should be given to specific selection and dosage.

In the present invention, the forming method of a film (which can also be referred to as a sheet for a thicker film) can be as follows: hot melt forming extrusion using an extruder such as tape casting, blowing, spraying, extruding to a vacuum hole for forming, rolling, bi-axial stretching, and unidirectional stretching, liquid forming, forming on an electro-spinning substrate, coating solution on a substrate, and pouring moulding. Later drilling on the film can be accomplished by laser, chemical corrosion, needle pricking, pressing with a pattern roller, ultrasonic drilling, etc.

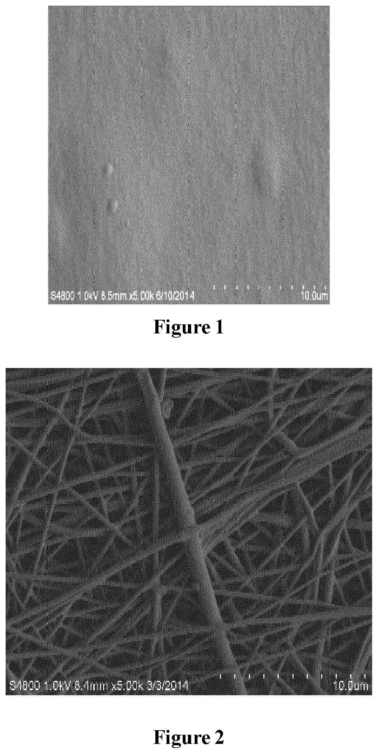

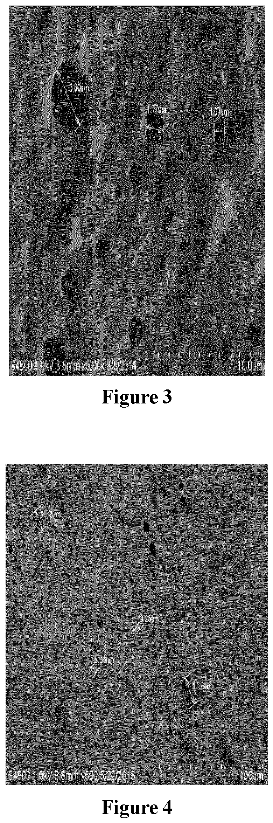

The micro-structure of the film prepared by the present invention can be porous or non-porous with only molecular gaps, as shown in Figures 1-6. The film prepared in the present invention (also known as the sheet if its thickness is relatively large) can be washed for 3-100 times according to ISO 6330, preferably 3-50 times. The typical moisture permeability value according to JIS L 1099 B1 is 100-60000, and the static water pressure value according to JIS L 1092 is above 10000 mm H2O. The film has a soft feel (in term of elastic modulus value, ASTM D882), a uniform appearance and no obvious adhesive spots, and it is suitable for clothing, shoe, glove, hat, bag, surface bonding or packaging of special devices which require moisture permeability function (such as electronic products, electronic devices, etc.), and surface bonding or packaging of food which requires moisture permeability function, especially for clothing purposes.

More specifically, the usage of the film prepared by the present invention can be one of the following:
(1) bonding onto clothing fabric with a film thickness of 5µm-50µm,
(2) bonding onto shoe fabric with a film or sheet thickness of 10-500µm,
(3) bonding onto the surface fabric for gloves or hats with a film thickness of 8-80µm,
(4) bonding onto the surface fabric for a luggage with a film or sheet thickness of 50-1000µm,
(5) bonding onto the surface or as packaging for instruments which require moisture permeability with a film or sheet thickness of 15-1000µm, and
(6) bonding onto the surface or as packaging for a food which requires moisture permeability with a film or sheet thickness of 15-1000µm.

In addition, the film or sheet prepared in the present invention can perform various surface treatments, which can be various functional treating coatings or discontinuous coatings, especially printing, functional printing (suitable for UV curing ink, screen printing, heat transfer printing, O-LED printing, roller printing, computer printing, etc., which can be any pattern), hydrophobic treatment, hydrophilic treatment, UV or IR barrier treatment, color treatment, inorganic or organic functional coatings such as graphene coating, aerogel layer, phase change cold feeling, heat sensing, temperature sensitive, pressure sensitive, etc. It can also be pattern burning treatment by surface chemical or various activation treatments such as surface corona, plasma, oxidation, etc. The thickness of the surface treatment layer is preferably more than 0.5µm.

As another aspect, in order to achieve the above objective, the present invention also provides a laminate containing waste thermoplastic elastomer and recycled polyester, comprising:
at least one layer formed by non-woven and/or textile fabrics with a gram weight of 7-1000 gsm, and
at least one layer formed by a composition containing waste thermoplastic elastomer and recycled polyester with a thickness of 5-1000µm,
wherein the composition containing waste thermoplastic elastomer and recycled polyester comprises:
   0.5% -90% of waste thermoplastic elastomer,
   0.5% -90% of recycled polyester with intrinsic viscosity between 0.5 and 2,
   0.01% -3% of viscosity modifier,
   0.01% -10% of slipping agent used for preventing the prepared layer from being adhered when the film is rolled, and
   0% -98% fresh thermoplastic elastomer,
   wherein the thermoplastic elastomer is one or more selected from the group consisting of polyester elastomer, nylon elastomer, biologically derived nylon elastomer, and biologically derived polyester elastomer,
   wherein the viscosity modifier is a reactive viscosity modifier and/or a non-reactive viscosity modifier in which the non-reactive viscosity modifier is one or more selected from the group consisting of paraffin, microcrystalline wax, polyethylene wax, oxidized polyethylene wax, polypropylene wax, Sasolwax, hyperbranched polymer, APAO, ethylene bis-stearamide, EVA, urea, hydroxylamine hydrochloride, hydroxylamine sulfate, and cyclohexanol and in which the reactive viscosity modifier is an epoxide or a multifunctional ester, alcohol or amine compound with low molecular weight which contains hydroxyl or amino groups, and
   wherein the slipping agent is one or more selected from the group consisting of fatty acid and its ester, fatty acid amide, metal soap, hydrocarbon, organosilicon compound, stearic acid, butyl stearate, and ethylene bis-stearamide.

Preferably, in the laminate of the present invention, an adhesive layer is further comprised between the layer formed by non-woven fabric and/or textile fabric and the layer formed by a composition containing waste thermoplastic elastomer. The adhesive layer is formed by hot melt adhesive, solvent adhesive, or water-based adhesive with a gram weight of 3-80 gsm.

For example, the film or sheet prepared by the present invention can be laminated with non-woven and textile fabrics to obtain a laminate, or directly coated or laminated with a hot melt adhesive layer, or a layer of hot melt adhesive on the film or fabric surface is formed before a laminate is formed. The latter two are preferably used for pre-coated adhesive, followed by sealing strips at the stitching position and composite with other laminated materials, ultimately achieving the complete recovery of the entire product through re-melting. The hot melt adhesive layer can be continuous or discontinuous.

In the laminate of the present invention, the used film or sheet can be entirely obtained from waste thermoplastic elastomer (except for viscosity modifiers, slipping agents, and possible functional additives), without or with little fresh thermoplastic elastomer. The thickness of the film or sheet can be 5-1000µm. The preferred choice is 5-50µm for clothing, 10-500µm for shoe, 50 to 1000µm for luggage, and 8-500µm for adhesive strips.

The laminate of the present invention can be a three-layer composite structure (the adhesive layer is considered as one layer, the same below), that is, one layer of textile fabric is bonded to a layer of film or sheet through adhesive. It can also be a 5-layer composite structure, that is, two layers of textile fabric are bonded to a layer of recycled film or sheet through adhesive in the middle. It can also be a composite structure with more layers.

In the laminate of the present invention, the fabric structure of the selected textile fabric can be fleece, plain woven fabric, knitted fabric (grid and plain weave, single and double knit), woven fabric (grid and plain weave, twill, single and double weave), foam, air layer, non-woven fabric cotton (Multi layer interface, natural cotton, new Sherry, etc. The composition of the fabric mainly comprises PP, PE, PET, PLA, PBAT, PVA (the above listed can be individual or mixed), or natural fabrics. The raw materials of the entire combination of fabrics can be recyclable or recycled thermoplastic resins, which can be PET, nylon, polypropylene, ultra-high density polyethylene, polyethylene, polypropylene, polyvinyl chloride, polystyrene, polymethyl methacrylate, polyester, polyester, paraformaldehyde, polyamide, polyphenyl ether, polyurethane, polysulfone, rubber, polyetherether ketone (PEEK), PPS, polyimide (PI), polyetherimide (PAI), PVA, etc., separately or in any combination. The recycling ratio range of the recycled thermoplastic resin is 0.5-100%, preferably 5% -100%, and preferably the same type of resin as the recycled film and sheet.

In the laminate of the present invention, it is necessary to ensure that the moisture permeability is above 100g/m²*24h and that the washing times can be more than 3 times. The adhesive can be polyurethane, polyester, APEO, nylon and others selected from hot melt adhesives, solvent adhesives, and water-based adhesives. The adhesive layer can be any discontinuous adhesive point such as dots, grids, spray-rays, patterns, etc. Processes, which do not require glue, such as burning, pouring, regular hot pasting, and so on, can be also applied.

Method of bonding: the adhesive can be pre-coated on the film (sheet) or fabric, and then the fabric and film (sheet) can be laminated by heating. It can also be laminated while applying glue. The surface of the fabric or film (sheet) can also be activated to have a bonding effect through sintering method in order to bond together.

The formula of the laminate in the present invention can be adjusted based on its occasion so as to have suitable washing performance, moisture permeability, soft hand feel, etc.

The present invention will be further explained in combination with the drawings and specific embodiments, but these specific embodiments are only explanations for some specific descriptions of the present invention and are not limitations of the present invention.

### Brief description of the drawings

Figure 1 is a SEM image to show the film structure without strictly physical significant pores;
Figure 2 is a SEM image to show the interlaced structure of nano-fibers formed by electro-spinning;
Figure 3 is a SEM image to show the film structure with solution pores;
Figure 4 is a SEM image of the film structure with physically stretched pores;
Figure 5 is a SEM image of the structure formed by the method of direct-laying nonwoven;
Figure 6 is a SEM image of the film structure with regular physical mechanical pores; and
Figure 7 is testing curves of elastic modulus.

### Description of embodiments of the invention

In the following specific embodiments, the testing methods for moisture permeability, hydrostatic pressure, elastic modulus and elongation at break are as follows:
(1) Hydrostatic pressure detection:
   A) Detection standard: AATCC127
   B) Sampling standard: Take at least three 200 mm*200 mm samples diagonally and avoid folding and contamination of the testing area. The samples should be humidified at (21 ± 2) °C and (65 ± 2)% for at least 4 hours before testing, and the front and back sides of the samples needs to be distinguished when testing;
   C) Detecting method: Under the condition of (21 ± 2) °C wipe dry the surface of the clamping device, and after humidity adjustment hold the sample to make its front surface come into contact with the water surface. Select a testing program with a pressure increase rate of 60 mbar/min, and record the water pressure value at the time of the third drop of water. The three drops should be different and not within 3mm of the edge of the clamping device.
(2) Moisture permeability: JIS L1099 B1 method Potassium acetate method:
   Equipment: Temperature of the incubator: 30 ± 2 °C, temperature of the water tank in the incubator: about 23 °C, and moisture permeable cup with an inner diameter of 56mm and a height of 75mm;
   Auxiliary film: PTFE film with a pore size of 80% and a thickness of 25um which is used to seal the mouth of the moisture permeable cup with hygroscopic agent in it;
   Hygroscopic agent: crystal formed by adding every 100ml of deionized water into each 300g of potassium acetate and leaving it to stay for one day and night;
   Sampling: approximately 20cm x 20cm;

### Testing steps:

Fix the sample on the support frame with rubber tape, and then place it in the water tank of the incubator with constant temperature in a depth of about 10mm for 15 minutes. Put 2/3 of the hygroscopic agent (about 23 °C) into the moisture permeable cup, fix the cup mouth with auxiliary film and rubber tape, weigh the loaded cup in the balance and record its weight as a1, and after weighing place the cup upside down on the fixed test sample. After 15 minutes, take out the cup, weigh it in a balance and record its weight as a2, and then calculate the moisture permeability.

### (3) Elastic modulus: ASTM D882:

Equipment: A tensile machine with stable movement speed, a thickness gauge with accuracy of 0.0025 mm, and a film sample cutting machine without visible gaps, serrations, etc in a cut sample;
Sampling: cut the sample according to the required testing direction with a width of 15 mm and a length of 300 mm (if there are obvious notches or serrations in a cut sample, it should be discarded and re-cut), prepare at least 5 samples in each direction, and then place the cut samples at 23 ± 1 °C and a relative humidity of 50 ± 5% for not less than 40h;

### Testing steps:

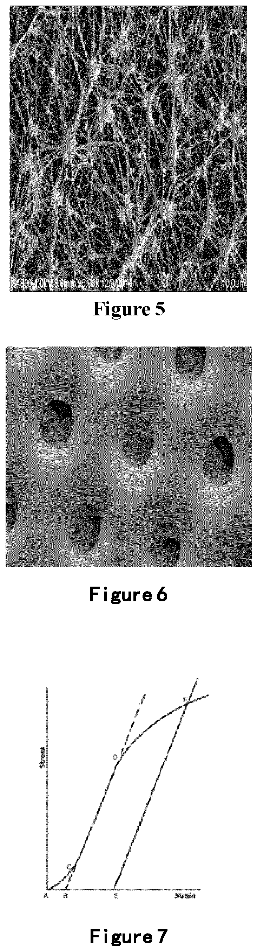

After resetting the force value to zero set the tension machine with a fixture spacing of 250 mm between clamps and a stretching speed of 25 mm/min according to the selected load sensor; and
Measure the thickness and width of the sample and input it into the software of the tensile machine. Clamp the sample, set the initial force value to 0 as far as possible, and then click to start. When the inflection point with the maximum slope appears in the figure (as shown in Figure 7), stop the test, read and record the result (Mpa).

### (4) Elongation at break: ASTM D882:

Equipment: A tensile machine with stable movement speed, a thickness gauge with accuracy of 0.0025 mm, and a film sample cutting machine without visible gaps, serrations, etc in a cut sample;
Sampling: cut the sample according to the required testing direction with a width of 15 mm and a length of 300 mm (if there are obvious notches or serrations in a cut sample, it should be discarded and re-cut), prepare at least 5 samples in each direction, and then place the cut samples at 23 ± 1 °C and a relative humidity of 50 ± 5% for not less than 40 h;

### Testing steps:

After resetting the force value to zero set the tension machine with a fixture spacing of 50 mm between clamps and a stretching speed of 500 mm/min according to the selected load sensor; and

Clamp the sample, set the initial force value to 0 as far as possible, and then click to start. Read and record the elongation% of the sample at the time of fracture when the sample breaks (if there is a sliding during a testing process or a sample breaks at its defect, then the result is invalid).

### Preparation of films:

The melt of the above formula can flow out through the gap at the front end of the mold and form a film. After leaving the mold, the melt passes through a short gap and reaches the surface of a casting roller with low temperature, rapidly cooling and shaping. The melt of the above formula can also be blown out through a rotating die with high-pressure air to form a tubular film. After leaving the rotating die, the melt passes through a short gap and reaches the surface of a casting roller with low-temperature, rapidly cooling and shaping. The above formula can also be melted and extruded into a vacuum hole for molding, the flat and hard sheet can be heated and softened, and then vacuum adsorbed on the surface of the mold, cooled, and then formed.

The above formula can also be plasticized to a temperature close to the viscous flow temperature through a series of horizontally roller gaps rotating towards each other, allowing the material to withstand extrusion and extension and then become a thin sheet shaped product with a certain thickness, width and surface smoothness. Furthermore, the above-mentioned film or sheet can be subjected to bi-axial or unidirectional stretching on longitudinal and transverse directions for a thick film or a casting sheet at temperatures below the melting point of the formula material and above its glass transition temperature, and then subjected to appropriate cooling or heat setting treatment or other special processing (such as corona discharge, coating, etc.) under a tension state.

Regarding drilling on it, the above-mentioned film or sheet can be punched mechanically, and high-strength drilling needles can be driven by a mechanical shaft to drill holes on the material using the cutting force generated by high rotation. Laser drilling can also be used, in which the material is irradiated with a high-power density laser beam, quickly heated to the vaporization temperature and evaporated to form holes. Chemical etching can also be used, in which the protecting membrane is removed from the area to be etched after exposure and development, and during etching the area is contacted with chemical corrosion solution to achieve the molding effect of forming a concave-convex or a hollow out. Needle shaped objects can also be designed to pierce holes, in which the needles can be carried on a roller or on a template and can be hot or cold. Holes can also be formed by rolling, in which a rotating roller with a smooth surface or with a certain shape is rolled to produce products with a certain shape. Ultrasonic drilling can also be used, in which the output signal is sent to a transducer of piezoelectric ceramics which converts ultrasonic electrical energy into mechanical vibration energy, and the vibration head is repeatedly vibrated with the combination of grinding powder (usually steel sand) and water to cause the processed parts to be worn through and form suitable small holes.

### Preparation of Laminates:

The film, which is prepared according to the formula and method of the present invention, can be laminated with various selected fabric structures and fabric components. The laminate can be a two-layer structure, a sandwich three-layer structure, or a structure with more than three layers. The laminating method used can be roller coating or spraying with liquid adhesive, or roller coating or spraying with hot melted adhesive. It can also be mesh printing with hot melted adhesive in which the film is laminated after rolling, or it can also be bonded by burning and pasting. At final the laminate of the present invention is formed.

### Example 1: Effect of the proportion of recycled PET bottle

According to the above film-preparing process, a series of films with a thickness of 15µm were prepared to investigate the influence of the proportion of recycled PET bottle on its moisture permeability, hydrostatic pressure (HSP), number of washing times (the hydrostatic pressure after some times of washing), and tactile softness. The results are shown in Table 1, where the composition to form the film does not contain any fresh thermoplastic elastomer. That means, except for recycled PET bottle, viscosity modifier and slipping agent, all other material in the composition is waste thermoplastic elastomer (e.g. online off-cutting material).

**Table 1: Effect of proportion of recycled PET bottle on product performance**

| Experimental No. | | 14 | 21 | 22 | 23 | 24 | 25 | 26 | 27 |
|---|---|---|---|---|---|---|---|---|---|
| % of recycled PET bottle | | 0% | 7% | 15% | 25% | 50% | 75% | 85% | 99.8% |
| Moisture permeability, g/m²*24h | | 110,000 | 35,000 | 30,000 | 10, 000 | 300 | 25 | 20 | 23 |
| Elastic modulus (hand feel), MPa | | 65 | 78 | 85 | 200 | 450 | 600 | 1000 | 1100 |
| HSP | 0 times | 20000 | 20000 | 20000 | 20000 | >35000 | >35000 | >35000 | >35000 |
| mm | | | | | | | | | |
| H₂O after washing | 5 times | 20000 | 20000 | 20000 | 20000 | >35000 | >35000 | >35000 | >35000 |
| | 10 times | 20000 | 20000 | 20000 | 20000 | >35000 | >35000 | >35000 | >35000 |
| | 20 times | 10000 | 12000 | 15000 | 18000 | >35000 | >35000 | >35000 | >35000 |
| | 50 times | 3000 | 8000 | 8000 | 5000 | 20000 | >30000 | >30000 | >30000 |

The data in Table 1 shows that the higher the proportion of added recycled PET bottle, the harder the hand feel, the lower the moisture permeability, the higher the hydrostatic pressure, and the more resistant to washing the film. When the proportion of recycled PET bottle is over 30%, the elastic modulus increases rapidly and the softness of the hand feel rapidly decreases.

### Example 2: Effect of the proportions of recycled PET bottle and off-cutting material on product performance

According to the above film-preparing process a series of films with a thickness of 15µm were prepared to investigate the influence of the proportions of recycled PET bottle and off-cutting thermoplastic elastomer (TPE) on product performance. The results are shown in Table 2.

**Table 2: Effect of proportions of recycled PET and off-cutting TPE on film performance**

| Experimental No. | | 28 | 29 | 210 | 211 | 212 | 213 | 22 |
|---|---|---|---|---|---|---|---|---|
| % of recycled PET bottle | | 2.5 | 7 | 15 | 15 | 15 | 15 | 15 |
| % of off-cutting TPE | | 2.5 | 3 | 10 | 25 | 50 | 70 | 84.8 |
| Total % of the above two | | 5% | 10% | 25% | 50% | 75% | 85% | 99.8% |
| Moisture permeability, g/m²*24h | | 70,000 | 38,000 | 350,000 | 330,000 | 35,000 | 31,000 | 30,000 |
| Elastic modulus (hand feel), MPa | | 79 | 82 | 85 | 89 | 88 | 90 | 85 |
| HSP | 0 times | 20000 | 20000 | 20000 | 20000 | 20000 | 20000 | 20000 |
| mm | | | | | | | | |
| H₂O after washing | 5 times | 20000 | 20000 | 20000 | 20000 | 20000 | 20000 | 20000 |
| | 10 times | 20000 | 20000 | 20000 | 10000 | 20000 | 20000 | 20000 |
| | 20 times | 10000 | 10000 | 8000 | 3000 | 10000 | 10000 | 15000 |
| | 50 times | 6000 | 6000 | 5500 | 5000 | 5000 | 4000 | 8000 |

From the data in Table 2, it can be found that when the proportion of recycled PET bottle exceeds 3%, such as about 15%, even if the proportion of recycled PET bottle plus waste TPE in the composition to form films is quite high, the resulted film exhibits excellent performances on moisture permeability, hydrostatic pressure, washing times, and softness of hand feel for example the fresh material (new TPE) could not be used at all.

### Example 3: Effect of film thickness on product performance

According to the above film-preparing process, a series of films with different thicknesses were prepared to investigate the effects of different thicknesses on moisture permeability, hydrostatic pressure (HSP), and number of washing times (the hydrostatic pressure after some times of washing). The results are shown in Table 3, where the compositions used to prepare the film comprises no new thermoplastic elastomer and about 15% of recycled PET bottle with the rest being waste thermoplastic elastomer, viscosity modifier and slipping agent.

**Table 3: Effect of film thickness on product performance**

| Experimental No. | | 214 | 215 | 216 | 22 | 217 | 218 | 219 | 220 | 221 | 222 |
|---|---|---|---|---|---|---|---|---|---|---|---|
| Thickness | | 5µm | 8µm | 10µm | 15µm | 20µm | 25µm | 30µm | 35µm | 100µm | 200µm |
| Moisture permeability g/m²*24h | | 41,000 | 36,500 | 38,000 | 30,000 | 25,000 | 15,000 | 10,000 | 5,000 | 800 | 100 |
| HSP | 0 times | 5000 | 9000 | 13000 | 20000 | 25000 | 30000 | >35000 | >35000 | >35000 | >35000 |
| mm | | | | | | | | | | | |
| H₂O after washing | 5 times | 5000 | 6000 | 10000 | 20000 | 25000 | 30000 | >35000 | >35000 | >35000 | >35000 |
| | 10 times | 3000 | 6000 | 10000 | 20000 | 25000 | 30000 | >35000 | >35000 | >35000 | >35000 |
| | 20 times | 1200 | 3000 | 8000 | 15000 | 15000 | 30000 | >35000 | >35000 | >35000 | >35000 |
| | 50 times | 200 | 300 | 500 | 8000 | 10000 | 22000 | >35000 | >35000 | >35000 | >35000 |

From the data in Table 3, it can be found that the larger the thickness, the smaller the moisture permeability. But all the films with a thickness between 5-30µm have relatively high moisture permeability. The larger the thickness, the higher the resistance against washing, and when its thickness is larger than 30µm, the film is almost unaffected by the number of washing times.

### Example 4: Effect of viscosity modifier on product performance

According to the above film-preparing process, a series of films with different content of viscosity modifier were prepared to investigate the effects of the dosage of viscosity modifier on film-forming ability, moisture permeability, hydrostatic pressure (HSP), number of washing times (the hydrostatic pressure after some times of washing), and hand feel (in term of elastic modulus). The results are shown in Table 4, where the film does not contain fresh thermoplastic elastomer and the thickness of the film is 15µm.

**Table 4: The Influence of Different Materials on Product Performance**

| Experimental No. | | 220 | 223 | 224 | 225 | 22 | 226 | 227 | 228 |
|---|---|---|---|---|---|---|---|---|---|
| % of viscosity modifier | | 0 | 0.001% | 0.005% | 0.1% | 0.15% | 0.3% | 0.5% | 1% |
| Longitudinal tensile strength, MPa | | - | 25 | 29 | 35 | 38 | 39 | 52 | 53 |
| Film forming ability | | no film | unstable | flowing slightly faster | yes | yes | yes | yes | yes |
| Moisture permeability, g/m2*24h | | - | 110,000 | 110,000 | 110,000 | 30,000 | 110,000 | 50,000 | 2000 |
| Elastic modulus (hand feel), MPa | | - | 60 | 63 | 64 | 65 | 80 | 200 | 500 |
| HSP | 0 times | - | 20000 | 20000 | 20000 | 20000 | 20000 | 20000 | 20000 |
| mm | 5 times | - | 20000 | 20000 | 20000 | 20000 | 20000 | 20000 | 20000 |
| H₂O after washing | 10 times | - | 20000 | 20000 | 20000 | 20000 | 20000 | 20000 | 20000 |
| | 20 times | - | 3000 | 4500 | 14000 | 15000 | 14000 | 14000 | 20000 |
| | 50 times | - | 300 | 3000 | 6000 | 8000 | 8000 | 10000 | 20000 |

From the data in Table 4, it can be found that for normal waste thermoplastic elastomer and recycled PET bottle sheet only liquid substances can be obtained during film making if the viscosity modifier is not added or its concentration is too low and film formation cannot be achieved or a stable film cannot be obtained. Of course, if the employed waste thermoplastic elastomer itself or the employed recycled PET bottle sheet itself contains a viscosity modifier, it is a different matter.

### Example 5: Effect of film structure

According to the above film-preparing process, a series of films were prepared to investigate the effects of both porous and non-porous films on moisture permeability, hydrostatic pressure (HSP), number of washing times (the hydrostatic pressure after some times of washing), and hand feel (in term of elastic modulus). The results are shown in Table 5, where the prepared films do not comprise any fresh thermoplastic elastomer with a thickness of 15µm.

**Table 5: The Influence of Different Pores, Pores, and Pore Types on Product Performance**

| Experimental No. | | 22 | 137 | 138 | 139 | 140 | 141 |
|---|---|---|---|---|---|---|---|
| Pore structure | | no physical pore as in Fig. 1 | structure as in Fig. 2 | structure as in Fig. 3 | structure as in Fig. 4 | structure as in Fig. 5 | structure as in Fig. 6 |
| Elongation at break,% | | 450 | 45 | 350 | 220 | 50 | 200 |
| Moisture permeability, g/m2*24h | | 30,000 | 50,000 | 60,000 | 9,000 | 30,000 | 25, 000 |
| Elastic modulus (hand feel), MPa | | 65 | 40 | 75 | 90 | 120 | 62 |
| HSP, mmH₂O | 0 times | 20000 | 10000 | 20000 | 10000 | 10000 | 2000 |
| HSP, mmH₂O | 5 times | 20000 | 8000 | 20000 | 8000 | 10000 | 1000 |
| HSP, mmH₂O | 10 times | 20000 | 8000 | 20000 | 8000 | 8000 | 300 |
| HSP, mmH₂O | 20 times | 10000 | 300 | 10000 | 3000 | 1000 | 200 |
| HSP, mmH₂O | 50 times | 3000 | broken | 3000 | broken | stratified | broken |

From the data in Table 5, it can be found that the moisture permeability of various films does not differ too much for different structures, but there are certain differences in strength, washing times, and elastic modulus. On the whole, the performance of non-porous film is the best, and the performance of films with solution pores is also good.

### Example 6

The inventors conducted experiments with experimental numbers 242 to 247 for a formula of 75% of recycled PET bottle plus waste thermoplastic elastomer, with experimental numbers 248-253 for a formula of 50% of recycled PET bottle plus waste thermoplastic elastomer, with experimental numbers 254-259 for a formula of 25% of recycled PET bottle plus waste thermoplastic elastomer, and with experimental numbers 260-264 for a formula of 10% of recycled PET bottle plus waste thermoplastic elastomer. The products were prepared using the process shown in figures 2 to 6, and their performances were similar to that shown in Table 5.

## Claims

1. A film prepared from waste thermoplastic elastomer, with a thickness of 3µm-1000µm, Among them, the film comprises:
0.5% -90% of waste thermoplastic elastomer,
0.5% -90% of recycled polyester with intrinsic viscosity between 0.5-2,
0.01% -3% of viscosity modifier,
0.01% -10% of slipping agent used for preventing the prepared film from being adhered when the film is rolled, and
0% -98% of fresh thermoplastic elastomer,
wherein the thermoplastic elastomer is one or more selected from the group consisting of polyester elastomer, nylon elastomer, biologically derived nylon elastomer, and biologically derived polyester elastomer,
wherein viscosity modifier is a reactive viscosity modifier and/or a non-reactive viscosity modifier, in which the non-reactive viscosity modifier is one or more selected from the group consisting of paraffin, microcrystalline wax, polyethylene wax, oxidized polyethylene wax, polypropylene wax, Sasolwax, hyperbranched polymer, APAO, ethylene bis-stearamide, EVA, urea, hydroxylamine hydrochloride, hydroxylamine sulfate, and cyclohexanol and in which the reactive viscosity modifier is an epoxide or a multifunctional ester, alcohol, or amine compound with low molecular weight which contains hydroxyl or amino groups,
wherein the slipping agent is one or more selected from the group consisting of fatty acid and its ester, fatty acid amide, metal soap, hydrocarbon, organosilicon compound, stearic acid, butyl stearate, and ethylene bis-stearamide.

2. The film according to claim 1, wherein the film comprises:
2.5% -80% of waste thermoplastic elastomer,
5% -80% of recycled polyester,
0.01% -2% of viscosity regulator,
0.01% -10% of slipping agent without influence on subsequent bonding, and
0% -60% of fresh thermoplastic elastomer.

3. The film according to claim 1, wherein the waste thermoplastic elastomer is a leftover material and/or an off-cutting material.

4. The film according to claim 1, wherein the recycled polyester is one or more recycled materials selected from the group consisting of polyester bottles, polyester fishing nets, polyester packaging materials, polyester injection molded parts in electronic products, polyester construction products and polyester home textiles.

5. The film according to claim 1, wherein the reactive viscosity modifier is one or more alcohol chain extenders selected from the group consisting of 1,4-butanediol (BDO), 1,6-hexanediol, glycerol, trimethylolpropane, diethylene glycol (DEG), triethylene glycol, neopentyl glycol (NPG), sorbitol, and diethylaminoethanol (DEAE).

6. The film according to claim 1, wherein the reactive viscosity modifier is one or more amine chain extenders and/or ester chain extenders selected from the group consisting of MOCA, liquid MOCA modified with formaldehyde, ethylenediamine (DA), N,N-dihydroxy (diisopropyl) aniline (HPA), hydroquinone bis(β-hydroxyethyl) ether (HQEE), bifunctional acid derivatives, isocyanates, anhydrides, epoxide, and glycidyl esters and their multifunctional derivatives.

7. The film according to claim 1, wherein the reactive viscosity regulator is an epoxide.

8. The film according to one of claims 1-7, wherein the use of the film is one of the following:
(1) bonding onto clothing fabric with a film thickness of 5µm-50µm,
(2) bonding onto shoe fabric with a film or sheet thickness of 10-500µm,
(3) bonding onto the surface fabric for gloves or hats with a film thickness of 8-80µm,
(4) bonding onto the surface fabric for a luggage with a film or sheet thickness of 50-1000µm,
(5) bonding onto the surface or as packaging for instruments which require moisture permeability with a film or sheet thickness of 15-1000µm, and
(6) bonding onto the surface or as packaging for a food which requires moisture permeability with a film or sheet thickness of 15-1000µm.

9. A laminate containing waste thermoplastic elastomer, comprising:
at least one layer formed by non-woven and/or textile fabrics with a gram weight of 7-1000 gsm, and
at least one layer formed by a composition containing waste thermoplastic elastomer with a thickness of 5-1000µm,
wherein the composition containing waste thermoplastic elastomer comprises and recycled polyester comprises:
0.5% -90% of waste thermoplastic elastomer,
0.5% -90% of recycled polyester with intrinsic viscosity between 0.5-2,
0.01% -3% of viscosity modifier,
0.01% -10% of slipping agent used for preventing the prepared film from being adhered when the film is rolled, and
0% -98% of fresh thermoplastic elastomer,
wherein the thermoplastic elastomer is one or more selected from the group consisting of polyester elastomer, nylon elastomer, biologically derived nylon elastomer, and biologically derived polyester elastomer,
wherein viscosity modifier is a reactive viscosity modifier and/or a non-reactive viscosity modifier, in which the non-reactive viscosity modifier is one or more selected from the group consisting of paraffin, microcrystalline wax, polyethylene wax, oxidized polyethylene wax, polypropylene wax, Sasolwax, hyperbranched polymer, APAO, ethylene bis-stearamide, EVA, urea, hydroxylamine hydrochloride, hydroxylamine sulfate, and cyclohexanol and in which the reactive viscosity modifier is an epoxide or a multifunctional ester, alcohol, or amine compound with low molecular weight which contains hydroxyl or amino groups,
wherein the slipping agent is one or more selected from the group consisting of fatty acid and its ester, fatty acid amide, metal soap, hydrocarbon, organosilicon compound, stearic acid, butyl stearate, and ethylene bis-stearamide.

10. The laminate according to claim 9, wherein the laminate further comprises an adhesive layer between the layer formed by non-woven fabric and/or textile fabric and the layer formed by a composition containing waste thermoplastic elastomer, in which said adhesive layer is formed by hot melt adhesive, solvent adhesive, or water-based adhesive with a gram weight of 3-80 gsm.
